Europäisches Patentamt

European Patent Office

Office européen des brevets

(19)

(11) **EP 0 846 129 B1**

(12) **FASCICULE DE BREVET EUROPEEN**

(45) Date de publication et mention
de la délivrance du brevet:
**06.05.1999 Bulletin 1999/18**

(21) Numéro de dépôt: **96929366.1**

(22) Date de dépôt: **23.08.1996**

(51) Int Cl.[6]: **C08B 37/00**

(86) Numéro de dépôt international:
**PCT/FR96/01314**

(87) Numéro de publication internationale:
**WO 97/08206 (06.03.1997 Gazette 1997/11)**

(54) **PROCEDE D'OBTENTION DE POLYSACCHARIDES SULFATES**

**VERFAHREN ZUR HERSTELLUNG VON SULFATIERTEN POLYSACCHARIDEN**

**METHOD FOR OBTAINING SULPHATED POLYSACCHARIDES**

(84) Etats contractants désignés:
**DE FR GB IT**

(30) Priorité: **24.08.1995 FR 9510045**

(43) Date de publication de la demande:
**10.06.1998 Bulletin 1998/24**

(73) Titulaires:
- **CENTRE NATIONAL DE
  LA RECHERCHE SCIENTIFIQUE (CNRS)
  75794 Paris Cédex 16 (FR)**
- **IFREMER
  INSTITUT FRANCAIS DE RECHERCHE POUR
  L'EXPLOITATION DE LA MER
  92138 Issy-les-Moulineaux Cédex (FR)**

(72) Inventeurs:
- **NARDELLA, Alain
  F-92800 Puteaux (FR)**
- **CHAUBET, Frédéric
  F-95600 Eaubonne (FR)**
- **SINQUIN, Corinne
  F-44300 Nantes (FR)**
- **COLLIEC JOUAULT, Sylvia
  F-44300 Nantes (FR)**
- **BOISSON-VIDAL, Catherine
  F-75020 Paris (FR)**
- **DURAND, Patrick
  F-44400 Rezé (FR)**
- **JOZEFONVICZ, Jacqueline
  F-60260 Lamorlaye (FR)**

(74) Mandataire: **Vialle-Presles, Marie José et al
Cabinet Orès,
6, Avenue de Messine
75008 Paris (FR)**

(56) Documents cités:
**EP-A- 0 403 377          WO-A-86/06729**

- **ANALYTICAL BIOCHEMISTRY, vol. 200, no. 1,
  Janvier 1992, SAN DIEGO, , pages 100-107,
  XP002021571 N. VOLPI ET AL.: "Low molecular
  weight heparins and oligoheparins produced by
  gel permeation enrichment or radical process:
  Comparison of structures and physicochemical
  and biological properties" cité dans la demande**

**Description**

La présente Invention est relative à l'obtention de polysaccharides sulfatés de faible masse molaire par dépolymérisation de fucanes extraits de Phéophycées.

Les fucanes sont des polysaccharides sulfatés, présents dans les parois cellulaires des thalles d'algues brunes. Le fucane brut extrait des thalles par extraction acide, est constitué d'une population hétérogène de molécules de masse molaire moyenne élevée (100 000 à 800 000 g/mol), qui sont principalement des polymères d'$\alpha$-1,2-L-fucose-4-sulfate. Cependant, les fucanes contiennent également une proportion non négligeable d'autres composants, en particulier des chaînes d'acides uroniques, et des sucres neutres tels que du D-xylose, et du D-galactose, et du D-mannose.

Les fucanes possèdent différentes propriétés qui rendent particulièrement intéressante leur exploitation comme source de nouveaux principes actifs thérapeutiques. Il a ainsi été montré qu'ils possédaient des activités anticoagulante, antithrombotique [T. NISHINO et T. NAGUMO, Carbohydr. Res. 229, p. 355-362, (1992) ; Demande EP 0403 377 ; S. COLLIEC et al. Thromb. Res. 64, p. 143-154 (1991) ; S. SOEDA et ai. Thromb. Res. 72, p. 247-256 (1993) ;], antivirale [M. BABA et al. J. AIDS, 3, p.493-492, (1990)], antiangiogénique [R. HAHNENBERGER et A. M. JACKOBSON, Glycoconjugate J., 8, 350-353 (1991)] et anti-complémentaire [C. BLONDIN et al., Molecular Immunology, 31, p. 247-253, (1994)]. Il a également été observé qu'ils pouvaient agir comme modulateurs de l'adhésion cellulaire [C. G. GLABE et al., J. Cell Sci, 61, p. 475-490, (1983)], du relargage de facteurs de croissance [D.A. BELFORT et al., J. cell. Physiol. 157, p. 184-189, (1993)], de la prolifération de cellules tumorales [M. ELLOUALI et al., Anticancer Research, 13, p. 2011-2020 (1993) ; D.R.COOMBE et al., Int. J. Cancer, 39, p. 82-90, (1987)], et bloquer les interactions spermatozoïde/ovule chez différentes espèces [M.C. MAHONY et al., Contraception, 48, p. 277-289, (1993) ; M.C. MAHONY et al., Contraception, 44, p. 657-665, (1991)].

Malgré leur intérêt potentiel, et bien que certaines de leurs propriétés, (par exemple leur activité anticoagulante) soient connues depuis longtemps, les fucanes bruts n'ont pas été utilisés en thérapeutique, à cause de leur masse molaire élevée et de leur hétérogénéité, qui entraînent une mauvaise solubilité, qui rend très difficile la caractérisation des préparations actives et leur obtention reproductible.

Lors de travaux précédents, l'équipe des Inventeurs a mis au point un procédé de lyse ménagée du fucane brut par hydrolyse acide (Demande EP 0403 377), suivie de fractionnement par filtration sur gel, qui permet d'obtenir des fractions polysaccharidiques de masse molaire inférieure ou égale à 20 000 g/mol. Ces fractions conservent les propriétés du fucane brut, telles que l'activité anticoagulante et l'activité anti-complémentaire.

Cependant, l'hydrolyse acide suivie de fractionnement ne permet d'obtenir les fractions de faibles masses molaires qu'avec un rendement médiocre ($\leq$ 10% du fucane brut de départ) ; en outre, la caractérisation des fractions obtenues par hydrolyse acide révèle une grande hétérogénéité des polysaccharides en masse comme en composition chimique.

Par ailleurs, il a été montré qu'il était possible d'obtenir des fractions polysaccharidiques de faible masse molaire et de composition constante à partir de l'héparine ou du dermatane sulfate, en mettant en oeuvre une réaction de dépolymérisation radicalaire [VOLPI et al., J. Chromatogr. B Biomed. Appl. 622, p. 13-20, (1993) ; Anal. Biochem. 200, p. 100-107, (1992)]. La réaction procède par la formation de radicaux libres, issus de la réaction d'un ion métallique ($Cu^{2+}$ ou $Fe^{3+}$) avec le peroxyde d'hydrogène [G. VAN DEDEM et J.I. NIELSEN, Pharmeuropa, 3, 202-218, (1990)]. Ces radicaux libres sont très réactifs et susceptibles de dégrader, à pH neutre, les polysaccharides plus efficacement que l'hydrolyse acide.

Les Inventeurs ont cherché à réaliser la dépolymérisation radicalaire d'une fraction de fucane de haute masse molaire (HMWF) par action du peroxyde d'hydrogène en présence d'acétate de cuivre. Les premiers essais effectués en se conformant au protocole décrit par VOLPI et al. ont conduit à l'obtention de fractions de masses molaires inférieures à 20 000 g/mol et de compositions constantes.

Cependant, pour obtenir des fractions de masses molaires inférieures à 10 000 g/mol, il a été nécessaire de fractionner le produit de dépolymérisation radicalaire, par exclusion stérique, avec pour conséquence une perte de produit voisine de 50%.

Les Inventeurs ont maintenant mis au point un nouveau procédé de dépolymérisation radicalaire, qui permet d'obtenir en une seule étape à partir du fucane brut, et avec un bon rendement, des fractions homogènes de masse molaire inférieure à 10 000 g/mol, sans qu'il soit nécessaire de procéder à un fractionnement complémentaire par exclusion stérique.

La présente invention a pour objet un procédé d'obtention de polysaccharides sulfatés par dépolymérisation radicalaire, caractérisé en ce que :

    a) l'on additionne à un volume V1 d'un mélange réactionnel comprenant un fucane brut issu de Phéophycées à une concentration comprise entre 5 mg/ml et 100 mg/ml, et en présence d'un catalyseur métallique, un volume V2 d'une solution de peroxyde d'hydrogène à une concentration comprise entre 5% et 30%, l'addition étant effectuée en continu et sous agitation pendant 0,5 heures à 10 heures, à un débit par minute compris entre V1/1000 et V1/10, et le mélange réactionnel étant maintenu à un pH compris entre 6 et 8 par ajout continu de soude, et à une température comprise entre 40 et 70°C.

b) l'on recueille les polysaccharides résultant de cette dépolymérisation.

Selon un mode de mise en oeuvre préféré de la présente Invention, le fucane brut issu de Phéophycées est présent dans le mélange réactionnel à une concentration comprise entre 10 mg/ml et 50 mg/ml.

Selon un autre mode de mise en oeuvre préféré de la présente Invention, on utilise une solution de peroxyde d'hydrogène à une concentration comprise entre 5% et 20%, de préférence de l'ordre de 9 à 10% et à un débit compris entre V1/50 et V1/500, de préférence de l'ordre de V1/100.

Des catalyseurs métalliques utilisables pour la mise en oeuvre de la présente Invention sont par exemple ceux mentionnés dans le Brevet Européen 221 977 au nom de OPOCRIN S.pA. LABORATORIO FARMACOBIOLOGICO.

Selon un mode de mise en oeuvre préféré de la présente Invention, le catalyseur métallique est présent dans le mélange réactionnel à une concentration comprise entre 0,01 et 0,1 M, de préférence entre 0,01 et 0,05 M.

Le procédé de dépolymérisation radicalaire conforme à l'Invention permet d'obtenir en une seule étape, sans fractionnement préparatif par chromatographie d'exclusion stérique, et avec un bon rendement, des fractions polysaccharidiques homogènes de masse molaire inférieure ou égale à 10 000 g/mol.

Dans le cadre de l'exposé de la présente invention, on entend par : "fraction homogène" une fraction qui, en chromatographie d'exclusion stérique haute performance, présente un seul pic principal représentant une population majoritaire dans la fraction ; l'indice de polydispersité calculé à partir de ce pic donne une valeur comprise entre 1 et 2.

Avantageusement, le procédé conforme à l'Invention comprend en outre une étape de chromatographie d'échange d'ions, qui peut être effectuée soit avant, soit après la dépolymérisation radicalaire, et à l'issue de laquelle on recueille la fraction qui, lorsque ladite chromatographie est effectuée sur une colonne DEAE-Sépharose CL6B (PHARMACIA), est éluée à une force ionique correspondant à une concentration en NaCl supérieure à 0,8 M, de préférence supérieure à 1M.

La présente Invention a également pour objet les fractions polysaccharidiques susceptibles d'être obtenues par le procédé conforme à l'Invention, tel que défini ci-dessus.

La présente invention sera mieux comprise à l'aide du complément de description qui va suivre, et qui se réfère à un exemple d'obtention de fractions de polysaccharides sulfatés à partir de fucanes extraits d'algues brunes, en mettant en oeuvre le procédé conforme à la présente invention.

## EXEMPLE 1:

## MATERIEL DE DEPART :

Trois préparations de fucane ont été testées comme materiel de départ ; on les désigne respectivement sous les abréviations suivantes :

FS : Préparation de fucoïdane de *Fucus vesiculosus* commercialisée par SIGMA FRANCE.

EA : Extrait acide obtenu à partir *d'Ascophyllum nodosum* selon le protocole décrit par S. COLLIEC et al. [Phytochemistry, 35, p. 697-700, (1994)].

P1 : Fraction de haute masse molaire obtenue par traitement acide de EA, comme décrit dans la Demande de Brevet Européen 403 377 (page 13, Exemple 1, b) A).

## Dépolymérisation radicalaire :

600 mg de fucane et 80 mg d'acétate de cuivre monohydraté (0,02 M) sont dissous dans 20 ml d'eau bidistillée, dans un réacteur maintenu à 60°C. Une solution à 9% (V/V) de peroxyde d'hydrogène est ajoutée à un débit de 12 ml par heure, et le pH est maintenu à 7,5 par addition continue de NaOH 2M. La réaction est arrêtée au bout de 5 heures. Le pH est ajusté à 5 avec de l'acide acétique, puis de la résine chélatante CHELEX® 100 (BIORAD) est ajoutée afin d'éliminer le cuivre contaminant du milieu. Après neutralisation par la soude 0,1 M la solution est dessalée et lyophilisée.

## Caractérisation des fractions polysaccharidiques :

- Les masses molaires des différentes fractions de fucane ont été déterminées par chromatographie d'exclusion stérique haute performance (HPSEC), dans 0,15 M NaCl, 0,05 M NaH$_2$PO$_4$, pH 7, en utilisant une colonne LICROSPHER® Si300 (MERK-CLEVENOT) et une colonne HEMASEC® BIO40 (ALLTECH). Les colonnes ont été calibrées avec des étalons polysaccharidiques suivants : pullulanes : 853 000-5 800 g/mol (POLYMER LABORATORIES, INTERCHIM), dextrane : 1 500 g/mol et melezitose : 522 g/mol (FLUKA), sucrose : 342 g/mol et glucose : 180 g/mol (SIGMA). Les résultats sont analysés en utilisant le logiciel CHROMSTAR® BRUKER [commercialisé par MERK].

- La teneur en fucose a été déterminée par la méthode cystéine-H$_2$SO$_4$ [Z. DISCHE, Method Biochem, Anal. 2, p. 313-358, (1955)].

- La teneur en acides uroniques a été établie en utilisant une modification de la méthode m-hydroxydiphényle-H$_2$SO$_4$ [T.M.C.C. FILISETTI-COZZI et N.C. CARPITTA, Anal. Biochem, 197, p. 157-162, (1991)] et en utilisant l'acide glucuronique comme étalon. L'interférence d'hexoses neutres a été évitée en utilisant du sulfamate de potassium et en procédant à des contrôles comprenant tous les réactifs à l'exception du m-hydroxydiphényle.

- Le contenu en sulfate des fractions a été déterminé par analyse élémentaire au soufre (S%), et en appliquant la relation suivante : pourcentage de groupes sulfate (%) = 3,22 x S%.

- L'azote a été dosé par analyse élémentaire. Les quantités trouvées sont toujours très faibles et aucune trace de la présence soit de fragments de protéines, soit d'acides aminés, ou de sucres contenant de l'azote n'a été détectée. En conséquence, les résultats du dosage sont donnés en azote pur (g/100g).

- La composition en sucres a été déterminée par chromatographie en phase gazeuse.

- L'activité anticoagulante de chacun des échantillons de fucane a été déterminée par mesure du TCA (Temps de Céphaline Activée) en utilisant le kit TCA (ORGANON TEKNIRA).

100 µl d'un tampon de contrôle, ou bien d'une solution d'héparine à différentes dilutions (0 à 1 µg/ml) (H410, Institut Choay, SANOFI, 170 UI/mg) ou de dilutions de fucane (0 à 50 µg/ml), sont mélangés avec 100 µl de plasma pauvre en plaquettes (PPP) et 100 µl de réactif TCA. L'ensemble est incubé pendant 3 minutes à 37°C. Le temps de formation du caillot est mesuré après l'addition de 100 µl d'une solution de CaCl$_2$ à 25 mM.

## RÉSULTATS

Trois dégradations ont été réalisées dans les mêmes conditions selon le protocole décrit ci-dessus, à partir de P1, EA, et FS.

Plusieurs prélèvements ont été effectués au cours de la dépolymérisation et analysés par HPSEC.

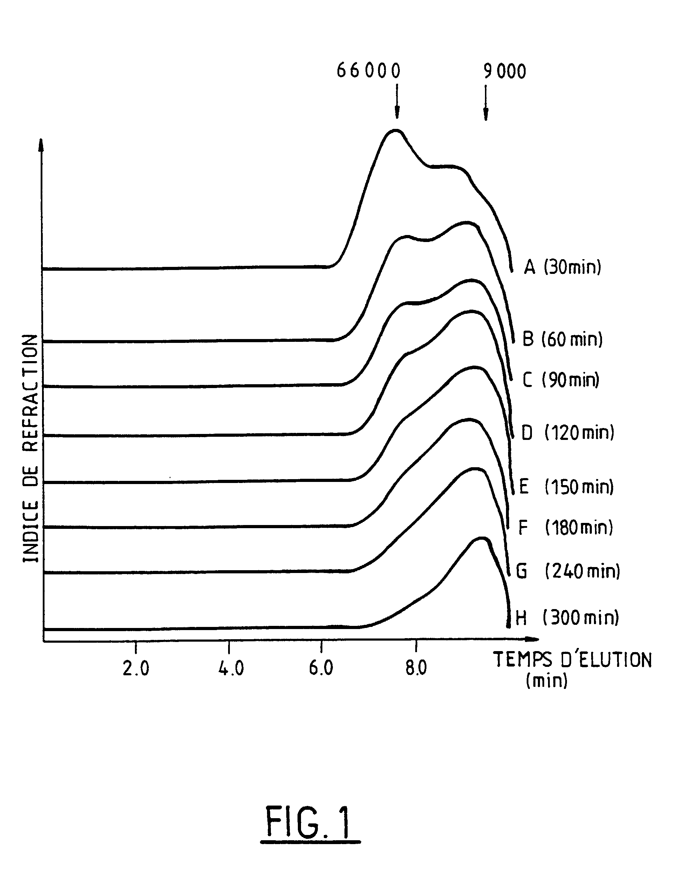

Les profils chromatographiques au cours du temps sont représentés sur la figure 1. On obtient en 30 minutes une fraction de masse molaire 66 000 g/mol (figure 1A). Ce produit n'est cependant pas suffisamment homogène (épaulement à 19 000 g/mol). Entre 60 et 300 minutes, le polysaccharide évolue vers un produit de masse molaire 9 000 g/mol qui possède cette fois un profil chromatographique homogène (figure 1H).

Les résultats sont rassemblés dans le tableau I ci-dessous. Les fractions obtenues, au bout de 300 minutes à partir de, P1, EA, et FS, sont respectivement dénommées DRP1, DREA, et DRFS.

Le taux d'acides uroniques des fractions issues des dépolymérisations diminue alors que le taux de fucose varie peu (tableau I). Par contre le taux de sulfates de DRP1 et DRFS augmente fortement mais reste constant dans le cas de DREA.

TABLEAU I

| Nom | Rendement (g/100) | Acide uronique (g/100g) | fucose (g/100g) | -SO₃Na (g/100g) | Azote (g/100g) | Mc (g/mol) | I= $\overline{M}p/\overline{M}n$ | Activité anticoagulante (UI/mg) |
|---|---|---|---|---|---|---|---|---|
| P1 | | 11,6±0,8 | 35,8±0,2 | 18,4±0,3 | 0,2 | 516 000 100 000 | ND | 10,1±2,0 |
| DRP1 | 50 | 6,5±0,5 | 32,2±0,1 | 30,1±0,0 | 0,1 | 7 800 | 2,1 | 6,8±1,0 |
| EA | | 5,7±0,4 | 31,3±0,1 | 26,1±0,1 | 0,2 | 556 000 | ND | 9,1±2,0 |
| DREA | 47 | 2,6±1,1 | 36,4±0,1 | 29,7±0,5 | 0,1 | 8 300 | 1,8 | 7,7±1,0 |
| FS | | 9,1±0,8 | 46,4±0,3 | 22,5±0,2 | 0,8 | 94 000 30 000 | ND | 8,7±1,0 |
| DRFS | 45 | 2,3±0,3 | 40,9±0,3 | 31,0±0,3 | 0,2 | 7 000 | 1,2 | 4,0±1,0 |

ND : non déterminé (Fraction trop hétérogène)

Mc : Masse molaire chromatographique déterminée au sommet du pic

$\overline{M}p$ : Masse molaire moyenne en poids.

$\overline{M}n$ : Masse molaire moyenne en nombre.

**EXEMPLE 2 :**

Le matériel de départ est un extrait acide EA, obtenu comme l'extrait acide utilisé à l'exemple 1.

**Dépolymérisation radicalaire :**

4,5 g de fucane brut EA sont dissous dans 150 ml d'une solution 0,02 M d'acétate de cuivre monohydraté dans un réacteur maintenu à 60°C. Une solution à 9% (V/V) de peroxyde d'hydrogène est ajoutée à un débit de 1,5 ml par minute, pendant 5 heures. Le pH est maintenu à 7,5 par addition continue de NaOH 2N. Le pH est ajusté à 5 avec de l'acide acétique puis de la résine chélatante CHELEX® 100 (BIORAD) est ajoutée, afin d'éliminer le cuivre contaminant du milieu. Après neutralisation par la soude 0,1 M la solution est dessalée et lyophilisée.

Les résultats de la réaction de dépolymérisation sont résumés dans les tableaux II et III ci-dessous. Le produit de la dépolymérisation est dénommé EADR.

TABLEAU II

| EA (g) | EADR (g) | Rendement (g/100g) | Mc (g/mol) |
|--------|----------|--------------------|------------|
| 4,5 | 2,0 | 44 | 6400 |

TABLEAU III

| Nom | Acide uronique | Fucose | $-SO_3Na$ | Azote | Mc | Activité anti-coagulante |
|-----|----------------|--------|-----------|-------|-----|--------------------------|
| EA | 5,7 (±0,4) | 31,3 (±0,1) | 26,1 (±0,1) | 0,2 | 566 000 | 9,1 (±2,0) |
| EADR | 1,2 (±0,1) | 40,0 (±0,2) | 31,4 (±0,2) | 0,1 | 6400 | 6,8 (±1,0) |

Les teneurs en acide uronique, fucose, $-SO_3Na$, et azote, sont exprimées en g/100g ; Mc est exprimée en g/mol ; l'activité anticoagulante est exprimée en UI/mg

**Fractionnement par chromatographie d'écharde d'ions**

1 g de EADR a été fractionné par chromatographie d'échange d'ions sur une colonne (2,6 x 5 x 40 cm) de DEAE SEPHAROSE® CL6B (PHARMACIA).

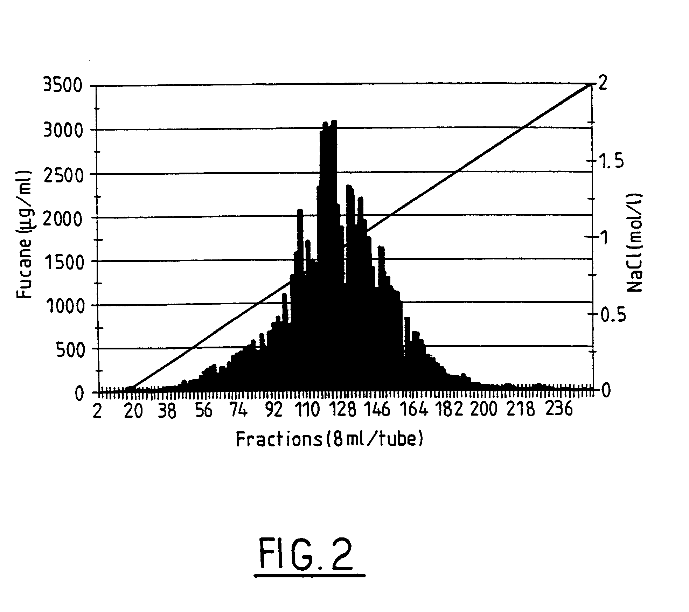

L'élution a été effectuée à la vitesse de 1,6 ml/mn, d'abord avec de l'eau, puis avec un gradient linéaire (0 à 2M)de NaCl. L'élution a été suivie à l'aide d'un détecteur conductimétrique (IBF) ; la figure 2 représente un profil d'élution.

Deux fractions (EADREI1 et EADREI2) correspondant à la partie recueillie par élution du gradient en NaCl ont été collectées, respectivement à des forces ioniques correspondant à 0,75 M NaCl, et 1,5 M NaCl.

Les caractéristiques de ces fractions sont indiquées dans le Tableau IV ci-dessous. Les teneurs en acide uronique, fucose, $-SO_3Na$, et azote, sont exprimées en g/100g Mc est exprimée en g/mol ; l'activité anticoagulante est exprimée en UI/mg

TABLEAU IV

| Nom | Acide uronique | Fucose | $-SO_3Na$ | Azote | Mc | Activité anti-coagulante |
|-----|----------------|--------|-----------|-------|-----|--------------------------|
| EADREI1 | 2,2 (±0,5) | 6,2 (±0,3) | 12,8 (±0,1) | 0,4 | 2500 | 0,5 (±0,2) |
| EADREI2 | 1,2 (±0,1) | 56,7 (±0,2) | 35,5 (±0,2) | traces | 7200 | 11,3 (±2,0) |

La fraction EADREI1, recueillie à faible force ionique présente un taux d'acides uroniques élevé et une activité anticoagulante relativement faible. Au contraire EADREI2 est plus riche en groupements sulfates et en fucose, et son activité anticoagulante est plus importante.

**EXEMPLE 3 : Comparaison des propriétés des fractions obtenues par un procédé conforme à l'Invention, avec des fractions de même masse molaire obtenues par hydrolyse acide**

Les fractions DREA et Q3 ont toutes deux été obtenues à partir d'une préparation de fucane brut EA.

La fraction DREA a été obtenue par le procédé de dépolymérisation radicalaire conforme à l'Invention, dans les conditions décrites à l'Exemple 1.

La fraction Q3 a été obtenue par hydrolyse acide ($H_2SO_4$ 1N, 45°C, 90 minutes) du fucane brut EA.

Les caractéristiques de ces fractions sont indiquées dans le Tableau V ci-dessous.

TABLEAU V

| Nom de la fraction | DREA | Q3 |
|---|---|---|
| Rendement (g/100g) | 47 | 10 |
| Acide uronique (g/100g) | 2.6±0,1 | 4,8±0,4 |
| Fucose (g/100g) | 36,4±0,1 | 43,3±0,1 |
| $-SO_3Na$ (g/100g) | 29,7±0,5 | 27,3±0,2 |
| Azote (g/100g) | 0,1 | 0,1 |
| Mc (g/mol) | 8300 | 9300 |
| I ($\overline{M}$p/$\overline{M}$n) | 1,8 | 1,4 |
| Activité anti-coagulante (UI/mg) | 8,2±1 | 4,2±1 |

**Revendications**

1.  Procédé d'obtention de polysaccharides sulfatés par dépolymérisation radicalaire, caractérisé en ce que :

    a) l'on additionne à un volume VI d'un mélange réactionnel comprenant un fucane brut issu de Phéophycées à une concentration comprise entre 5 mg/ml et 100 mg/ml, et en présence d'un catalyseur métallique, un volume V2 d'une solution de peroxyde d'hydrogène à une concentration comprise entre 5% et 30%, l'addition étant effectuée en continu et sous agitation pendant 0,5 heures à 10 heures, à un débit par minute compris entre V1/1000 et V1/10, et le mélange réactionnel étant maintenu à un pH compris entre 6 et 8 par ajout continu de soude, et à une température comprise entre 40 et 70°C.
    b) l'on recueille les polysaccharides résultant de cette dépolymérisation.

2.  Procédé selon la revendication 1, caractérisé en ce que le fucane brut est présent dans le mélange réactionnel à une concentration comprise entre 10 mg/ml et 50 mg/ml.

3.  Procédé selon une quelconque des revendications 1 ou 2, caractérisé en ce que l'on utilise une solution de peroxyde d'hydrogène à une concentration comprise entre 5% et 20%, et à un débit compris entre V1/50 et V1/500.

4.  Procédé selon une quelconque des revendications 1 à 3 caractérisé en ce que le catalyseur métallique est présent dans le mélange réactionnel à une concentration comprise entre 0,01 et 0,1 M.

5.  Procédé selon une quelconque des revendications 1 à 4, caractérisé en ce qu'il comprend en outre une étape de chromatographie d'échange d'ions, qui peut être effectuée soit avant, soit après la dépolymérisation radicalaire, et à l'issue de laquelle on recueille la fraction qui, lorsque ladite chromatographie est effectuée sur une colonne DEAE Sépharose CL6B, est éluée à une force ionique correspondant à une concentration en NaCl supérieure à 0,8 M, de préférence supérieure à 1M.

6.  Fraction polysaccharidique de masse molaire inférieure ou égale à 10 000 g/mol, caractérisée en ce qu'elle est susceptible d'être obtenue par le procédé de dépolymérisation radicalaire selon une quelconque des revendications 1 à 5.

**Patentansprüche**

1. Verfahren zum Erhalt von sulfatierten Polysacchariden durch radikalische Depolymerisation, dadurch **gekennzeichnet**, daß man:

   a) einem Volumen V1 eines Reaktionsgemisches, umfassend ein Rohfucan aus Pheophyceen, in einer Konzentration zwischen 5 mg/ml und 100 mg/ml und in Gegenwart eines Metallkatalysators ein Volumen V2 einer Lösung aus Wasserstoffperoxid in einer Konzentration zwischen 5% und 30% zusetzt, wobei die Zusetzung kontinuierlich unter Rühren für 0,5 Stunden bis 10 Stunden mit einer Zugabemenge pro Minute zwischen V1/1000 und V1/10 erfolgt, und das Reaktionsgemisch bei einem pH-Wert zwischen 6 und 8 durch kontinuierliche Zugabe von Natronlauge und bei einer Temperatur zwischen 40 und 70°C gehalten wird,
   b) man die aus dieser Depolymerisation hervorgehenden Polysaccharide isoliert.

2. Verfahren nach Anspruch 1, dadurch **gekennzeichnet**, daß das Rohfucan in dem Reaktionsgemisch in einer Konzentration zwischen 10 mg/ml und 50 mg/ml vorhanden ist.

3. Verfahren nach einem der Ansprüche 1 oder 2, dadurch **gekennzeichnet**, daß man eine Lösung aus Wasserstoffperoxid in einer Konzentration zwischen 5% und 20% und in einer Menge zwischen V1/50 und V1/500 verwendet.

4. Verfahren nach einem der Ansprüche 1 bis 3, dadurch **gekennzeichnet**, daß der Metallkatalysator in dem Reaktionsgemisch in einer Konzentration zwischen 0,01 und 0,1 M vorhanden ist.

5. Verfahren nach einem der Ansprüche 1 bis 4, dadurch **gekennzeichnet**, daß es weiterhin eine Stufe der Ionenaustauschchromatographie umfaßt, die entweder vor oder nach der radikalischen Depolymerisation durchgeführt werden kann und an deren Ende die Fraktion isoliert wird, die, wenn die Chromatographie über eine DEAE-Sepharose-CL6B-Säule durchgeführt wird, bei einer Ionenstärke entsprechend einer NaCl-Konzentration über 0,8 M, bevorzugt über 1 M, eluiert wird.

6. Polysaccharidfraktion mit einer Molmasse von kleiner oder gleich 10000 g/mol, dadurch **gekennzeichnet**, daß sie durch das radikalische Depolymerisationsverfahren nach einem der Ansprüche 1 bis 5 erhalten werden kann.

**Claims**

1. Method of obtaining sulphated polysaccharides by free-radical depolymerization, characterized in that:

   a) to a volume V1 of a reaction mixture comprising a crude fucan originating from Phaeophyceae at a concentration of between 5 mg/ml and 100 mg/ml, and in the presence of a metallic catalyst, is added a volume V2 of a solution of hydrogen peroxide at a concentration of between 5% and 30%, the addition being carried out continuously and with stirring for 0.5 hours to 10 hours at a rate per minute of between V1/1000 and V1/10, and the reaction mixture being maintained at a pH of between 6 and 8 by continuous addition of sodium hydroxide, and at a temperature of between 40 and 70°C,
   b) the polysaccharides resulting from this depolymerization are collected.

2. Method according to Claim 1, characterized in that the crude fucan is present in the reaction mixture at a concentration of between 10 mg/ml and 50 mg/ml.

3. Method according to either of Claims 1 and 2, characterized in that a solution of hydrogen peroxide at a concentration of between 5% and 20%, and at a rate of between V1/50 and V1/500, is used.

4. Method according to any one of Claims 1 to 3, characterized in that the metallic catalyst is present in the reaction mixture at a concentration of between 0.01 and 0.1 M.

5. Method according to any one of Claims 1 to 4, characterized in that it additionally comprises an ionexchange chromatography step, which can be carried out either before or after the free-radical depolymerization, and at the end of which the fraction is collected which, when the said chromatography is carried out on a DEAF-Sepharose CL6B column, is eluted at an ionic strength corresponding to an NaCl concentration of greater than 0.8 M, preferably of greater than 1 M.

6. Polysaccharide fraction of molecular weight lower than or equal to 10,000 g/mol, characterized in that it is capable of being obtained by the method of free-radical depolymerization according to any one of Claims 1 to 5.

66 000    9 000

INDICE DE REFRACTION

A (30 min)
B (60 min)
C (90 min)
D (120 min)
E (150 min)
F (180 min)
G (240 min)
H (300 min)

2.0    4.0    6.0    8.0    TEMPS D'ELUTION
(min)

FIG. 1

## FIG.2